# EUROPÄISCHE PATENTSCHRIFT

(11) **EP 3 736 838 B1**
(45) Veröffentlichungstag und Bekanntmachung des Hinweises auf die Patenterteilung: **27.09.2023**
(21) Anmeldenummer: 20173160.1
(22) Anmeldetag: 06.05.2020
(51) Int. Cl.: H01C 1/01, H01C 1/06, H01C 7/12, H01G 2/04, H01G 2/06, H01G 2/14, H01T 1/16, H01C 1/16, H01G 4/38, H01T 19/04, H05F 3/04, H01C 1/014, H01T 1/14

(54) **HOCHSPANNUNGSWIDERSTANDSANORDNUNG, ELEKTRODENANORDNUNG MIT EINER SOLCHEN HOCHSPANNUNGSWIDERSTANDSANORDNUNG, VERFAHREN ZUM HERSTELLEN EINER HOCHSPANNUNGSWIDERSTANDSANORDNUNG UND IONISATIONSVORRICHTUNG**
HIGH-VOLTAGE RESISTOR, ELECTRODE ARRANGEMENT WITH SUCH A HIGH-VOLTAGE RESISTOR, METHOD FOR MANUFACTURING A HIGH-VOLTAGE RESISTOR AND IONIZATION DEVICE
AGENCEMENT DE RÉSISTANCE À HAUTE TENSION, AGENCEMENT D'ÉLECTRODE DOTÉ D'UN TEL AGENCEMENT DE RÉSISTANCE À HAUTE TENSION, PROCÉDÉ DE FABRICATION D'UN AGENCEMENT DE RÉSISTANCE À HAUTE TENSION ET DISPOSITIF D'IONISATION

(30) Priorität: 10.05.2019 DE 102019112335
(43) Veröffentlichungstag der Anmeldung: 11.11.2020
(73) Patentinhaber: Gema Switzerland GmbH, 9015 St. Gallen (CH)
(72) Erfinder: MAUCHLE, Felix, 9030 Abtwil (CH); NAGEL, Michael, 78462 Konstanz (DE)
(74) Vertreter: Meissner Bolte Partnerschaft mbB

(56) Entgegenhaltungen:
- EP-A1- 0 384 022
- DE-A1-102006 005 670
- DE-A1-102011 017 796
- DE-B3-102015 000 800
- DE-B4-102011 017 796
- DE-T2- 60 018 049

## Beschreibung

Die vorliegende Erfindung liegt allgemein auf dem Gebiet der Herstellung von Hochspannungselektrodenanordnungen, die als Entlade- oder Aufladeelektroden in verschiedensten Anwendungen Verwendung finden.

Solche Hochspannungselektroden sind in einer Vielzahl verschiedener Ausführungen und Anordnungen bekannt. Allen Ausführungen ist dabei der Einbau von verschiedenen, miteinander elektrisch leitend verbundenen, vorzugsweise verlöteten, in einem Isolierstoffkörper eingebrachten Komponenten, gemeinsam.

So ist beispielsweise aus der Druckschrift DE 2 713 334 A1 bekannt, dass einzelne Hochspannungswiderstände versehen mit Emissionsspitzen in ein Isolierstoffkörper so eingebaut werden, dass über die freistehenden Isolationsspitzen mittels Koronaentladung Ladung übertragen werden kann.

Die Herstellung der nach dem Stand der Technik bekannten Hochspannungselektrodenanordnungen ist vergleichsweise aufwendig, da die einzelnen Komponenten, wie beispielsweise Hochspannungswiderstände, Emissionsspitzen und Verbindungselemente, in Handarbeit entweder direkt in einen Isolierstoffkörper eingebaut werden, oder außerhalb zu einem Halbfabrikat zusammengebaut werden, um dann in den Isolierstoffkörper eingebaut zu werden. Die Verbindung zwischen den einzelnen Komponenten einer nach dem Stand der Technik gebauten Elektrodenanordnung erfolgt in der Regel in Crimp-, Schraub- oder vorzugsweise in Löttechnik. Die so durch Handarbeit erstellten Verbindungen der einzelnen Komponenten untereinander bzw. das Herstellen der Halbfabrikate und deren Einbau in ein Isolierstoffkörper stellen den kostenintensivsten Anteil bei den nach dem Stand der Technik bekannten Hochspannungselektrodenanordnungen dar.

Weiter sind aus dem Stand der Technik Hochspannungselektroden mit einer Vielzahl von zueinander parallel angeordneten Einzelelektroden, welche gruppenweise oder alle miteinander elektrisch verbunden sind, bekannt. Diese Hochspannungselektroden können insbesondere ein langgestrecktes, elastisch formbares Band aus einem elektrisch isolierenden Werkstoff aufweisen, wobei die Einzelelektroden senkrecht zur Längserstreckung des Bandes angeordnet sind und über eine Längskante des Bandes mit ihrer Elektrodenspitze überstehen, wobei in Längsrichtung auf zumindest einer Flachseite des Bandes ein elektrischer Leiter aufgebracht ist. DE 600 18 049 T2 offenbart eine Hochspannungswiderstandsanordnung mit einem stabförmigen Trägersubstrat aus einem elektrisch isolierenden Material und einer Vielzahl in Längsrichtung des Trägersubstrats voneinander beabstandeten Einzelwiderständen , wobei mindestens eine sich in Längsrichtung des Trägersubstrats erstreckende Leiterbahn auf dem Trägersubstrat ausgebildet ist, welche mit den Einzelwiderständen galvanisch verbunden ist, und wobei die Einzelwiderstände als SMD-Bauteile ausgeführt sind.

Der Nachteil dieser aus dem Stand der Technik allgemein bekannten Hochspannungselektrodenanordnungen ist insbesondere darin zu sehen, dass die einzelnen elektrischen Komponenten, wie insbesondere die den Elektrodenspitzen zugeordneten Einzelwiderstände manuell mit dem elektrischen Leiter auf dem flexiblen Band galvanisch kontaktiert und insbesondere verlötet werden müssen. Diese Handbestückung ist relativ zeitintensiv. Darüber hinaus ist das Raster der Elektrodenspitzen auf Grund der manuellen Bestückung häufig recht ungenau und bei der Montage der Hochspannungselektrode ist eine Ausrichtung der einzelnen Elektrodenspitzen auf Grund des elastisch formbaren Bandes nur mit einem hohen Zeitaufwand realisierbar. Ein weiterer Nachteil ist darin zu sehen, dass auf Grund der notwendigen Handbestückung sich das elastisch formbare Band mit dem auf dem Band aufgebrachten elektrischen Leiter nur schwer reinigen lässt, was allerdings notwendig ist, um eine sichere galvanische Kopplung der Elektrodenspitzen mit dem elektrischen Leiter des elastisch formbaren Bandes sicher zu stellen.

Auf Grundlage dieser Problemstellung liegt der Erfindung die Aufgabe zugrunde, eine Hochspannungswiderstandsanordnung für eine Elektrodenanordnung einer Ionisationsvorrichtung anzugeben, welche mit einem möglichst geringen Aufwand herstellbar ist, wobei gleichzeitig eine optimale Ausrichtung der Elektrodenspitzen realisierbar ist.

Diese Aufgabe wird erfindungsgemäß durch eine Hochspannungswiderstandsanordnung gemäß dem unabhängigen Patenanspruch 1 gelöst.

Des Weiteren wird die der Erfindung zugrundeliegende Aufgabe durch eine Elektrodenanordnung gemäß dem nebengeordneten Patentanspruch 7 sowie durch ein Verfahren zum Herstellen einer Hochspannungswiderstandsanordnung gemäß dem nebengeordneten Patentanspruch 9 gelöst.

Eine lonisationsvorrichtung gemäß der Erfindung ist mit den Merkmale des Anspruchs 11 definiert.

Demgemäß betrifft die Erfindung insbesondere eine Hochspannungswiderstandsanordnung mit einem stabförmigen Trägersubstrat aus einem elektrisch isolierenden Material und einer Vielzahl in Längsrichtung des Trägersubstrats voneinander beabstandeten Einzelwiderständen und/oder diskreten Kondensatoren, wobei mindestens eine sich in Längsrichtung des Trägersubstrats erstreckende Leiterbahn auf dem Trägersubstrat ausgebildet ist, welche mit den Einzelwiderständen und/oder mit den diskreten Kondensatoren galvanisch verbunden ist. Erfindungsgemäß ist vorgesehen, dass die Einzelwiderstände und/oder die diskreten Kondensatoren als SMD-Bauelemente ausgeführt sind, die mittels lötfähiger Anschlussflächen direkt auf dem Trägersubstrat gelötet sind.

Die Erfindung beruht auf dem allgemeinen Gedanken, die Hochspannungswiderstandsanordnung als PCB-Board auszuführen, wobei die Einzelwiderstände bzw. diskreten Kondensatoren nicht mehr über eine Handbestückung auf dem Trägersubstrat (PCB-Board) aufgebracht werden, sondern mittels leitfähiger Anschlussflächen direkt auf dem Trägersubstrat gelötet sind. Auf diese Weise ist eine vollautomatische Bestückung durch einen Bestückungsautomaten möglich. Darüber hinaus ist die Rasterung zwischen den in Längsrichtung des Trägersubstrats voneinander beabstandeten Einzelwiderständen und/oder diskreten Kondensatoren sehr genau.

Die sich in Längsrichtung des Trägersubstrats erstreckende Leiterbahn kann beispielsweise auf das Trägersubstrat aufgedruckt sein. Alternativ hierzu ist es denkbar, die Leiterbahn mittels eines photochemischen Verfahrens auf das Trägersubstrat aufzubringen.

Das Trägersubstrat ist vorzugsweise als PCB-Board ausgeführt und besteht beispielsweise aus einem Faser verstärkten Kunststoffmaterial. In einer kostengünstigeren Variante kann das Trägersubstrat aus einem Hartpapier gebildet sein.

Insbesondere ist das Trägersubstrat relativ wiegesteif ausgeführt, was die Endmontage der Hochspannungswiderstandsanordnung vereinfacht, und insbesondere ein Ausrichten von mit der Hochspannungswiderstandsanordnung verbundenen Elektrodenspitzen bei der Endmontage überflüssig macht.

Gemäß Ausführungsformen der erfindungsgemäßen Hochspannungswiderstandsanordnung ist jedem Einzelwiderstand und/oder jedem diskreten Kondensator ein von der Längsrichtung des Trägersubstrats in einer Richtung radial abstehende Anschlussbereich zugeordnet, welcher Integral mit dem Trägersubstrat ausgebildet ist, und auf welchem der zugehörige Einzelwiderstand und/oder der zugehörige diskrete Kondensator angeordnet ist. Dabei ist vorgesehen, dass auf jedem Anschlussbereich ein entsprechender Einzelwiderstand und/oder ein entsprechender diskreter Kondensator angeordnet ist, wobei gemäß bevorzugten Realisierungen auf jedem Anschlussbereich ein SMD-Keramik-Widerstand angeordnet ist.

Jedem Einzelwiderstand und/oder jedem diskreten Kondensator wird eine erste Anschluss-Leiterbahn zugeordnet über welche der Einzelwiderstand und/oder der diskrete Kondensator mit der sich in Längsrichtung des Trägersubstrats erstreckenden Leiterbahn galvanisch verbunden ist. Jedem Einzelwiderstand und/oder jedem diskreten Kondensator ist eine zweite Anschluss-Leiterbahn zugeordnet, über welche der Einzelwiderstand bzw. der diskrete Kondensator mit einer Anschlussfläche für eine Elektrodenspitze galvanisch verbunden ist. Die erste und zweite Leiterbahn sind - wie auch die sich in Längsrichtung des Trägersubstrats erstreckende Leiterbahn - mittels eines photochemischen Verfahrens auf das Trägersubstrat aufgebracht. Gleiches kann auch für die den Einzelwiderständen bzw. diskreten Kondensatoren zugeordneten Anschlussbereichen dienen.

Auf diese Weise ist die Hochspannungswiderstandsanordnung vollautomatisch herstellbar und insbesondere das Trägersubstrat vollautomatisch bestückbar, insbesondere mit einem Bestückungsautomaten, sodass zur Herstellung der Hochspannungswiderstandsanordnung jedwede Handbestückung entfällt.

Gemäß vorteilhaften Weiterbildungen der erfindungsgemäßen Hochspannungswiderstandsanordnung ist auf dem Trägersubstrat und der auf dem Trägersubstrat ausgebildeten Leiterbahn zumindest bereichsweise eine Lackschicht ausgebildet.

Das Trägersubstrat kann eine Dicke zwischen vorzugsweise 1,0 mm und 2,0 mm aufweisen, während für die Leiterbahn eine Dicke aus einem Kupfermaterial zwischen 0,025 mm und 0,045 mm genügt. Die optional auf dem Trägersubstrat und der Leiterbahn aufgebrachte Lackschicht kann eine Dicke zwischen 0,005 mm und 0,015 mm aufweisen. Selbstverständlich kommen aber auch andere Dimensionen für die Dicke des Trägersubstrats, für die Dicke der Leiterbahn und/oder für die Dicke der optional vorgesehenen Lackschicht in Frage.

Um einen modularen Aufbau zu ermöglichen, ist gemäß Ausführungsformen der vorliegenden Erfindung vorgesehen, dass das Trägersubstrat in mehrere Trägersubstratabschnitte unterteilt oder unterteilbar ist, welche jeweils eine vorab festgelegte oder festlegbare, definierte Länge aufweisen. Zur Festlegung der Gesamtlänge der Hochspannungswiderstandsanordnung können dann bedarfsweise mehrere aneinander angrenzende Trägersubstratabschnitte stirnseitig miteinander verbunden werden, insbesondere durch Verlöten und/oder einer anderen Verbindungstechnik. Auf diese Weise kann bedarfsweise die Länge der Hochspannungswiderstandsanordnung bedarfsweise erweitert werden, wobei dann die Hochspannungswiderstandsanordnung aus mehreren miteinander verbundenen Trägersubstratabschnitten besteht.

Die vorab festgelegte oder festlegbare, definierte Länge Trägersubstratabschnitte beträgt vorzugsweise 10 cm bis 100 cm, und noch bevorzugter 20 cm bis 70 cm, um mit den Trägersubstratabschnitten möglichst flexibel unterschiedliche lange Hochspannungswiderstandsanordnungen realisieren zu können.

Gemäß einem weiteren Aspekt betrifft die Erfindung eine Elektrodenanordnung beispielsweise für eine Ionisationsvorrichtung zum Reduzieren oder Aufbringen elektrostatischer Ladung auf einer bewegten Materialbahn, wobei die Elektrodenanordnung eine Hochspannungswiderstandsanordnung der zuvor genannten erfindungsgemäßen Art aufweist. Die Elektrodenanordnung weist ferner eine Vielzahl von Elektrodenspitzen auf. Die Elektrodenspitzen sind vorzugsweise aus Wolfram gefertigt (reines Wolfram oder Wolfram mit einem gewissen Thorium-, Zirkonium-, und/oder Lathangehalt), obwohl selbstverständlich auch andere Materialien, wie beispielsweise Edelstahl, in Frage kommen. Jeweils eine Elektrodenspitze ist dabei galvanisch mit einem der Vielzahl von Widerständen bzw. diskreten Kondensatoren verbunden.

Bei der erfindungsgemäßen Elektrodenanordnung ist jedem Widerstand und/oder jedem diskreten Kondensator eine Anschlussfläche zugeordnet, mit welcher der entsprechende Widerstand bzw. der entsprechende diskrete Kondensator galvanisch verbunden ist. Insbesondere ist dabei vorgesehen, dass jeweils eine Elektrodenspitze galvanisch mit der Anschlussfläche verbunden ist, und zwar vorzugsweise über einen Lötkontakt oder einen Crimpkontakt.

Gemäß einem weiteren Aspekt betrifft die Erfindung ein Verfahren zum Herstellen einer Hochspannungswiderstandsanordnung der erfindungsgemäßen Art, zum Herstellen einer Elektrodenanordnung der zuvor genannten Art, wobei das Verfahren den Verfahrensschritt des Bereitstellens eines Trägersubstrats aus einem elektrisch isolierenden Material, den Verfahrensschritt des Ausbildens einer Leiterbahnstruktur auf dem Trägersubstrat, und den Verfahrensschritt des Anschließens der SMD-Bauteile an der Leiterbahnstruktur aufweist, und zwar in dem die SMD-Bauteile direkt auf das Trägersubstrat gelötet werden. Die Leiterbahnstruktur wird dabei vollautomatisch mit einem photochemischen Verfahren ausgebildet, wobei die SMD-Bauteile vollautomatisch auf dem Trägersubstrat bestückt werden.

Gemäß einer Weiterbildung des erfindungsgemäßen Verfahrens ist vorgesehen, dass jedes SMD-Bauteil galvanisch mit einer Elektrodenspitze verbunden wird, wobei vor dem galvanischen Verbinden mit den Elektrodenspitzen das Trägersubstrat in einer Leiterplatten-Reinigungsanlage vollautomatisch staub- und fettfrei gereinigt wird.

Gemäß einem weiteren Aspekt betrifft die Erfindung eine Ionisationsvorrichtung insbesondere in Gestalt eines Ionisationsstabes zum berührungsfreien Neutralisieren elektrostatischer Aufladungen insbesondere von Isoliermaterialien, wobei die Ionisationsvorrichtung ein Gehäuse aufweist zur Aufnahme eines Kaskadeneinsatzes mit einer Kaskadenschaltung, und wobei von dem Gehäuse mindestens eine Elektrodenanordnung der erfindungsgemäßen Art getragen wird. Dabei ist insbesondere vorgesehen, dass ein Ausgang der Kaskadenschaltung kapazitiv, induktiv oder resistiv mit der sich in Längsrichtung des Trägersubstrats der Elektrodenanordnung erstreckenden Leiterbahn verbunden oder verbindbar ist.

Die Erfindung wird nachfolgend unter Bezugnahme auf die beiliegenden Zeichnungen näher beschrieben.

Es zeigen:
- FIG. 1: schematisch eine herkömmliche, aus dem Stand der Technik bekannte Elektrodenanordnung für eine Ionisationsvorrichtung zum Reduzieren oder Aufbringen elektrostatischer Ladung auf einer bewegten Materialbahn;
- FIG. 2: schematisch eine exemplarische Ausführungsform einer Hochspannungswiderstandsanordnung für eine Elektrodenanordnung insbesondere einer Ionisationsvorrichtung;
- FIG. 3: schematisch und in einer isometrischen, teilgeschnittenen Explosionsdarstellung eine exemplarische Ausführungsform einer als Ionisationsstab ausgebildeten Ionisationsvorrichtung gemäß der vorliegenden Erfindung; und
- FIG. 4: schematisch und in einer isometrischen Ansicht ein Gehäuse einer weiteren Ausführungsform einer insbesondere in Gestalt eines Ionisationsstabes ausgebildeten Ionisationsvorrichtung gemäß der vorliegenden Erfindung.

Hochspannungswiderstände kommen bei Spannungen von etwa 1 kV bis 150 kV zum Einsatz und besitzen ohmsche Widerstandswerte von 100 kΩ bis 100 GΩ. Dabei ist ihre Leistungsaufnahme üblicherweise kleiner als ein Watt. Abhängig von der Baugröße des Widerstandes kann die Leistungsaufnahme grundsätzlich auch größer als ein Watt sein.

Derartige Hochspannungswiderstände kommen insbesondere bei Elektrodenanordnungen 16 von Ionisationsvorrichtungen 20 zum Einsatz, die zum Reduzieren elektrischer Ladung oder zum Aufladen von bewegten Materialbahnen verwendet werden. Innerhalb einer derartigen Ionisationsvorrichtung 20 kommt dabei üblicherweise eine große Anzahl an Elektroden zur Anwendung, wobei jeder Elektrode bzw. jeder Elektrodenspitze ein eigener Hochspannungswiderstand 10 oder ein diskreter Kondensator als Schutzwiderstand bzw. Vorwiderstand zugeordnet ist.

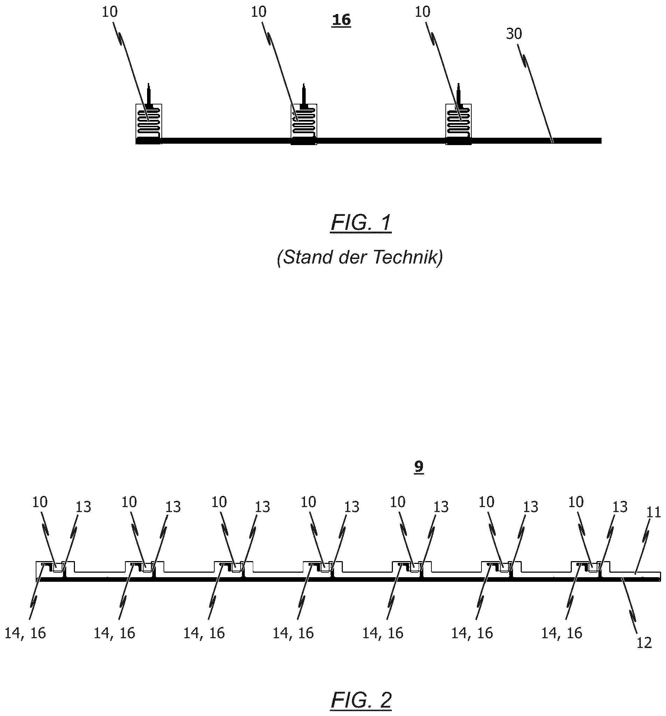

In FIG. 1 ist schematisch eine aus dem Stand der Technik bekannte Elektrodenanordnung 16 für Ionisationsvorrichtungen 20 gezeigt. Diese Elektrodenanordnung 16 besteht im Wesentlichen aus einem langgestreckten, elastisch formbaren Band 30, auf welchem ein elektrischer Leiter aufgebracht ist bzw. welcher als elektrischer Leiter ausgebildet sein kann, wie beispielsweise als ein elastisches Kupferband. Mittels Handbestückung sind beabstandet Einzelwiderstände 10 galvanisch mit dem elektrischen Leiter verbunden. Jedem Einzelwiderstand 10 ist eine Elektrodenspitze zugeordnet, die ebenfalls mittels Handbestückung mit dem Hochspannungswiderstand 10 galvanisch verbunden ist, insbesondere durch Lötung.

Die aus dem Stand der Technik bekannte und schematisch in FIG. 1 gezeigte Elektrodenanordnung 16 weist den Nachteil auf, dass deren Herstellung relativ zeitaufwendig ist, wobei gleichzeitig die Rasterung der Elektrodenspitze häufig ungenau ist, was durch die Handbestückung bedingt ist.

Um eine entsprechende Hochspannungswiderstandsanordnung 9 bzw. eine damit ausgestattete Elektrodenanordnung 16 bereitzustellen, die sich insbesondere durch reduzierte Herstellungskosten auszeichnet und eine optimale Ausrichtung der Elektrodenspitze gewährleistet, wird erfindungsgemäß vorgeschlagen, dass die Hochspannungswiderstandsanordnung 9, wie es in FIG. 2 schematisch angedeutet ist, aus einem stabförmigen Trägersubstrat 11 besteht, welches relativ biegesteif ist und beispielsweise als PCB-Board ausgeführt sein kann. Insbesondere ist es somit denkbar, dass das Trägersubstrat 11 aus einem faserverstärkten Kunststoffmaterial oder alternativ hierzu aus Hartpapier gebildet ist.

Die Hochspannungswiderstandsanordnung 9, die schematisch in FIG. 2 gezeigt ist, weist ferner eine Vielzahl in Längsrichtung des Trägersubstrats 11 voneinander beabstandeter Einzelwiderstände 10 auf, sowie eine sich in Längsrichtung des Trägersubstrats 11 erstreckende Leiterbahn 12, die auf dem Trägersubstrat 11 ausgebildet ist. Die auf dem Trägersubstrat 11 ausgebildete Leiterbahn 12 ist mit den Einzelwiderständen 10 galvanisch verbunden.

Insbesondere ist erfindungsgemäß vorgesehen, dass die Einzelwiderstände 10 als SMD-Bauelemente ausgeführt sind, die mittels leitfähiger Anschlussflächen direkt auf dem Trägersubstrat 11 gelötet sind.

Wie es der Darstellung in FIG. 2 entnommen werden kann, ist es in diesem Zusammenhang insbesondere denkbar, dass jedem Einzelwiderstand 10 ein von der Längsrichtung des Trägersubstrats 11 in einer Richtung radial abstehender Anschlussbereich zugeordnet ist, welcher integral mit dem Trägersubstrat 11 ausgebildet ist, und auf welchem der zugehörige Einzelwiderstand 10 angeordnet ist. Vorzugsweise ist dabei auf jedem Anschlussbereich ein SMD-Keramik-Widerstand 10 angeordnet.

Bei der exemplarischen Ausführungsform der erfindungsgemäßen Hochspannungswiderstandsanordnung 9 gemäß FIG. 2 ist ferner vorgesehen, dass jedem Einzelwiderstand 10 eine erste Anschluss-Leiterbahn 13 zugeordnet ist, über welche der Einzelwiderstand 10 mit der sich in Längsrichtung des Trägersubstrats 11 erstreckenden Leiterbahn 12 galvanisch verbunden ist. Darüber hinaus ist vorgesehen, dass jedem Einzelwiderstand 10 eine zweite Anschluss-Leiterbahn 14 zugeordnet ist, über welche der Einzelwiderstand 10 mit einer Anschlussfläche für eine Elektrodenspitze (in FIG. 2 nicht dargestellt) galvanisch verbunden ist.

Vorzugsweise sind die sich in Längsrichtung des Trägersubstrats 11 erstreckende Leiterbahn 12, die ersten und zweiten Anschluss-Leiterbahnen 13, 14 und die Anschlussbereiche 15 der Hochspannungswiderstandsanordnung 9 mittels eines photochemischen Verfahrens vollautomatisch auf das Trägersubstrat 11 aufgebracht.

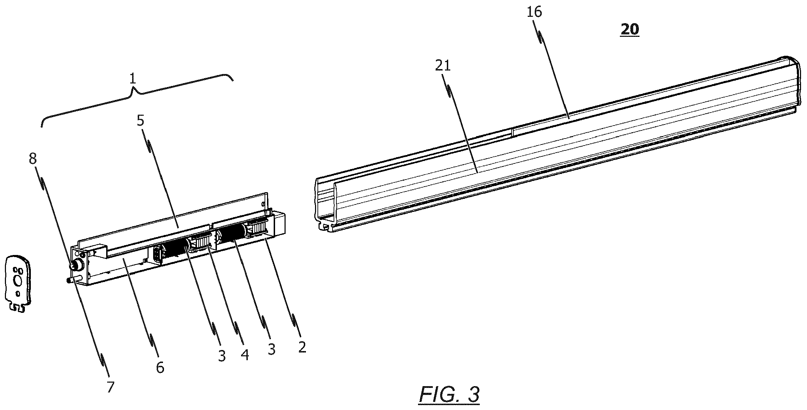

In FIG. 3 ist schematisch und in einer isometrischen, teilgeschnittenen Explosionsdarstellung eine exemplarische Ausführungsform einer als Ionisationsstab ausgeführten Ionisationsvorrichtung 20 gezeigt, welche insbesondere zum berührungsfreien Neutralisieren elektrostatischer Aufladungen insbesondere von Isoliermaterialien dient, und welche eine Elektrodenanordnung 16 mit der erfindungsgemäßen Hochspannungswiderstandsanordnung 9 aufweist.

Die exemplarische Ausführungsform des erfindungsgemäßen Ionisationsstabes 20 eignet sich insbesondere zum berührungsfreien Neutralisieren elektrostatischer Aufladungen und/oder zum gezielten Aufladen (wahlweise positiv oder negativ), insbesondere von Isoliermaterialien. Der Ionisationsstab 20 weist ein Außengehäuse 21 beispielsweise in Gestalt eines teilweise offenen Profils auf. In dem Außengehäuse 21 ist zumindest bereichsweise ein Kaskadeneinsatz 1 vorzugsweise austauschbar aufgenommen.

Hierbei ist insbesondere vorgesehen, dass das Außengehäuse 21 mit dem in dem Außengehäuse 21 zumindest bereichsweise aufgenommenen Kaskadeneinsatz 1 quer zur Bewegungsrichtung eines zu behandelnden Substrats (nicht in den Zeichnungen dargestellt) montierbar ist.

Der erfindungsgemäße Ionisationsstab 20 eignet sich insbesondere als Antistatikvorrichtung zum Reduzieren von elektrostatischen Ladungen auf bewegten Materialbahnen. Er zeichnet sich insbesondere durch seine vereinfachte Handhabung, durch eine verbesserte Bedienbarkeit sowie durch eine reduzierte Dimensionierung auf. Zu diesem Zweck sind alle für den Betrieb notwendige Komponenten des Ionisationsstabes 20 in dem Kaskadeneinsatz 1 integriert, welcher vorzugsweise austauschbar in dem Außengehäuse 21 des Ionisationsstabes 20 aufgenommen bzw. aufnehmbar ist.

Bei dem Kaskadeneinsatz 1 handelt es sich insbesondere um einen modular aufgebauten Einsatz, welcher flexibel bei einem Ionisationsstab 20 eingesetzt und/oder ausgetauscht werden kann. Bei der in FIG. 1 gezeigten Ausführungsform ist vorgesehen, dass in dem Gehäuse 2 des Kaskadeneinsatzes 1 zwei in Längsrichtung des Gehäuses 2 gesehen hintereinander angeordnete und jeweils in Vergussmaterial 4 eingegossene Kaskadenschaltungen 3 vorgesehen sind.

Ferner ist vorgesehen, dass in dem Gehäuse 2 des Kaskadeneinsatzes 1 eine Ansteuerelektronik 6, vorzugsweise in Gestalt eines modulhaft aufgebauten Blockes, aufgenommen ist, um die mindestens eine Kaskadenschaltung 3 des Kaskadeneinsatzes 1 geeignet anzusteuern. Hierbei bietet es sich an, die Ansteuerelektronik 6 vorzugsweise in einen Endbereich des Gehäuses 2 des Kaskadeneinsatzes 1 und benachbart zu einer der mindestens einen Kaskadenschaltung 3 vorzusehen. Denkbar in diesem Zusammenhang ist es dann, dass sich der Träger 5 des Kaskadeneinsatzes 1, von welchem die erfindungsgemäße Elektrodenanordnung 16 mit der Hochspannungswiderstandsanordnung 9 aufgenommen ist, in Längsrichtung des Gehäuses 2 zumindest bereichsweise über den Endbereich des Gehäuses 2 erstreckt, in welchem die Ansteuerelektronik 6 aufgenommen ist.

Des Weiteren ist vorgesehen, dass vorzugsweise in einer endseitigen Stirnfläche eines Endbereiches des Gehäuses 2, in welchem die Ansteuerelektronik 6 aufgenommen ist, mindestens ein elektrischer Anschluss 7 zur Energieversorgung der mindestens einen Kaskadenschaltung 3 und mindestens eine Datenschnittstelle 8 zur Datenkommunikation mit der Ansteuerelektronik 6 vorgesehen sind. Die mindestens eine Datenschnittstelle 8 und die Ansteuerelektronik 6 sind dabei vorzugsweise für eine bidirektionale Kommunikation, insbesondere über einen CAN-Bus, ausgebildet.

Zusätzlich hierzu weist der Kaskadeneinsatz 1 in einer endseitigen Stirnfläche des Endbereichs des Gehäuses 2, in welchem die Ansteuerelektronik 6 aufgenommen ist, eine Schnittstelle zum manuellen Eingeben von Steuerbefehlen an die Ansteuerelektronik 6 auf. Ferner oder alternativ hierzu ist es von Vorteil, wenn ebenfalls vorzugsweise in der endseitigen Stirnfläche des Endbereichs des Gehäuses 2, in welchem die Ansteuerelektronik 6 aufgenommen ist, eine Anzeigeeinrichtung, insbesondere in Gestalt mindestens einer LED und/oder in Gestalt eines Displays vorgesehen ist zum optischen Ausgeben von Informationen an den Benutzer des Kaskadeneinsatzes 1.

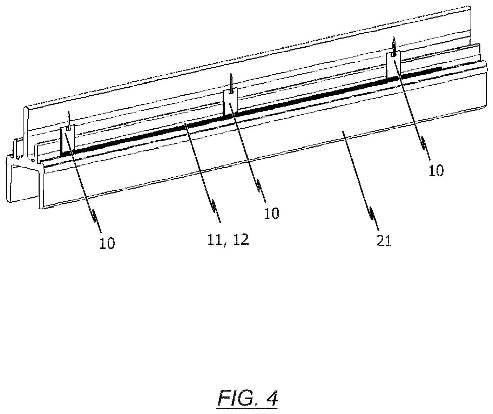

In FIG. 4 ist in einer schematischen und isometrischen Ansicht ein Gehäuse 21 einer als Ionisationsstab ausgeführten Ionisationsvorrichtung 20 gezeigt, wobei von dem Gehäuse 21 ein Kaskadeneinsatz oder eine Kaskadenschaltung 3 aufnehmbar ist. Wie in FIG. 4 angedeutet, wird von dem Gehäuse 21 eine Elektrodenanordnung 16 der erfindungsgemäßen Art getragen. Die Elektrodenanordnung 16 weist eine Hochspannungswiderstandsanordnung 9 gemäß FIG. 2 auf, sowie eine Vielzahl von insbesondere aus Wolfram bestehende Elektrodenspitzen, wobei jeweils eine Elektrodenspitze galvanisch mit einem der Vielzahl von Widerständen 10 der Hochspannungswiderstandsanordnung 9 verbunden ist.

Beispielsweise ist es in diesem Zusammenhang denkbar, dass jedem Widerstand 10 der Hochspannungswiderstandsanordnung 9 eine Anschlussfläche zugeordnet ist, mit welcher der entsprechende Widerstand 10 galvanisch verbunden ist, wobei jeweils eine Elektrodenspitze galvanisch mit der Anschlussfläche vorzugsweise über einen Lötkontakt oder über einen Crimpkontakt verbunden ist.

Die Erfindung ist nicht auf die in den Zeichnungen gezeigten Ausführungsformen beschränkt, sondern ergibt sich aus einer Zusammenschau sämtlicher hierin offenbarter Merkmale.

### Bezugszeichenliste

- 1: Kaskadeneinsatz
- 2: Gehäuse des Kaskadeneinsatzes
- 3: Kaskadenschaltung
- 4: Vergussmaterial
- 5: Träger
- 6: Ansteuerelektronik
- 7: Anschluss
- 8: Datenschnittstelle
- 9: Hochspannungswiderstandsanordnung
- 10: Einzelwiderstand
- 11: Trägersubstrat
- 12: sich in Längsrichtung des Trägersubstrats 11 erstreckende Leiterbahn
- 13: erste Anschluss-Leiterbahn 13
- 14: zweite Anschluss-Leiterbahn 14
- 15: Anschlussbereich
- 16: Elektrodenanordnung
- 20: Ionisationsvorrichtung/Ionisationsstab
- 21: Außengehäuse der Ionisationsvorrichtung/des Ionisationsstabes
- 30: flexibles Band

## Patentansprüche

1. Hochspannungswiderstandsanordnung (9) mit einem stabförmigen Trägersubstrat (11) aus einem elektrisch isolierenden Material und einer Vielzahl in Längsrichtung des Trägersubstrats (11) voneinander beabstandeten Einzelwiderständen (10) und/oder diskreten Kondensatoren, wobei mindestens eine sich in Längsrichtung des Trägersubstrats (11) erstreckende Leiterbahn (12) auf dem Trägersubstrat (11) ausgebildet ist, welche mit den Einzelwiderständen (10) und/oder mit den diskreten Kondensatoren galvanisch verbunden ist, und wobei die Einzelwiderstände (10) und/oder die diskreten Kondensatoren als SMD-Bauteile ausgeführt sind, die mittels lötfähiger Anschlussflächen direkt auf dem Trägersubstrat (11) gelötet sind, wobei jedem Einzelwiderstand (10) und/oder jedem diskreten Kondensator ein von der Längsrichtung des Trägersubstrats (11) in einer Richtung radial abstehende Anschlussbereich zugeordnet ist, welcher integral mit dem Trägersubstrat (11) ausgebildet ist, und auf welchem der zugehörige Einzelwiderstand (10) und/oder der zugehörige diskrete Kondensator angeordnet ist, und wobei jedem Einzelwiderstand (10) und/oder jedem diskreten Kondensator eine erste Anschluss-Leiterbahn (13) zugeordnet ist, über die der Einzelwiderstand (10) und/oder der diskrete Kondensator mit der sich in Längsrichtung des Trägersubstrats (11) erstreckenden Leiterbahn (12) galvanisch verbunden ist, und wobei jedem Einzelwiderstand (10) und/oder jedem diskreten Kondensator eine zweite Anschluss-Leiterbahn (14) zugeordnet ist, über welche der Einzelwiderstand (10) und/oder der diskrete Kondensator mit einer Anschlussfläche für eine Elektrodenspitze galvanisch verbunden ist, wobei die sich in Längsrichtung des Trägersubstrats (11) erstreckende Leiterbahn (12), die ersten und zweiten Leiterbahnen (13, 14) und die Anschlussbereiche (15) mittels eines photochemischen Verfahrens auf das Trägersubstrat (11) aufgebracht sind.

2. Hochspannungswiderstandsanordnung (9) nach Anspruch 1,
wobei auf jedem Anschlussbereich ein SMD-Keramik-Widerstand angeordnet ist.

3. Hochspannungswiderstandsanordnung (9) nach Anspruch 1 oder 2, wobei das Trägersubstrat (11) aus einem faserverstärkten Kunststoffmaterial oder aus Hartpapier gebildet ist.

4. Hochspannungswiderstandsanordnung (9) nach einem der Ansprüche 1 bis 3, wobei auf dem Trägersubstrat (11) und auf der auf dem Trägersubstrat (11) ausgebildeten Leiterbahn (12) zumindest bereichsweise eine Lackschicht ausgebildet ist.

5. Hochspannungswiderstandsanordnung (9) nach Anspruch 4,
wobei das Trägersubstrat (11) eine Dicke zwischen 1,0 mm und 2,0 mm aufweist, wobei die Leiterbahn (12) eine Dicke zwischen 0,025 mm und 0,045 mm aufweist, und wobei die Lackschicht eine Dicke zwischen 0,005 mm und 0,015 mm aufweist.

6. Hochspannungswiderstandsanordnung (9) nach einem der Ansprüche 1 bis 5, wobei das Trägersubstrat (11) unterteilt ist in mehrere Trägersubstratabschnitte, welche jeweils eine vorab festgelegte oder festlegbare, definierte Länge aufweisen, wobei zur Festlegung der Gesamtlänge der Hochspannungswiderstandsanordnung (9) bedarfsweise mehrere aneinander angrenzende Trägersubstratabschnitte stirnseitig miteinander verbunden oder verbindbar sind, insbesondere durch Verlöten und/oder einer anderen Verbindungstechnik.

7. Elektrodenanordnung (16) für eine Ionisationsvorrichtung (20) zum Reduzieren oder Aufbringen elektrostatischer Ladung auf einer bewegten Materialbahn, wobei die Elektrodenanordnung (16) eine Hochspannungswiderstandsanordnung (9) nach einem der Ansprüche 1 bis 6 und eine Vielzahl von insbesondere Wolfram oder Edelstahl aufweisende Elektrodenspitzen aufweist, wobei jeweils eine Elektrodenspitze galvanisch mit einem der Vielzahl von Widerständen (10) und/oder diskreten Kondensatoren verbunden ist.

8. Elektrodenanordnung (16) nach Anspruch 7, wobei jedem Widerstand (10) und/oder jedem diskreten Kondensator eine Anschlussfläche zugeordnet ist, mit welcher der entsprechende Widerstand (10) und/oder diskrete Kondensator galvanisch verbunden ist, und wobei jeweils eine Elektrodenspitze galvanisch mit der Anschlussfläche verbunden ist, vorzugsweise über einen Lötkontakt oder über einen Crimpkontakt.

9. Verfahren zum Herstellen einer Hochspannungswiderstandsanordnung (9) nach einem der Ansprüche 1 bis 6, wobei das Verfahren die folgenden Verfahrensschritte aufweist:
- Bereitstellen eines Trägersubstrats (11) aus einem elektrisch isolierenden Material;
- Ausbilden einer Leiterbahnstruktur auf dem Trägersubstrat (11); und
- Anschließen der SMD-Bauteile an der Leiterbahnstruktur, und zwar indem die SMD-Bauteile direkt auf das Trägersubstrat (11) gelötet werden,
wobei die Leiterbahnstruktur vollautomatisch mit einem photochemischen Verfahren ausgebildet wird, und wobei die SMD-Bauteile vorzugsweise vollautomatisch auf dem Trägersubstrat (11) bestückt werden.

10. Verfahren nach Anspruch 9,
wobei jedes SMD-Bauteil galvanisch mit einer Elektrodenspitze verbunden wird, wobei vor dem galvanischen Verbinden mit den Elektrodenspitzen das Trägersubstrat (11) in einer Leiterplatten-Reinigungsanlage automatisch staub- und fettfrei gereinigt wird.

11. Ionisationsvorrichtung (20) insbesondere in Gestalt eines Ionisationsstabes zum berührungsfreien Neutralisieren elektrostatischer Aufladungen insbesondere von Isoliermaterialien, wobei die Ionisationsvorrichtung (20) ein Gehäuse (21) aufweist zur Aufnahme eines Kaskadeneinsatzes (1) mit einer Kaskadenschaltung (3), und wobei von dem Gehäuse (21) mindestens eine Elektrodenanordnung (16) nach Anspruch 7 oder 8 getragen wird, wobei ein Ausgang der Kaskadenschaltung (3) kapazitiv, induktiv oder resestiv mit der sich in Längsrichtung des Trägersubstrats (11) der Elektrodenanordnung (16) erstreckenden Leiterbahn (12) verbunden oder verbindbar ist.

## Claims

1. A high voltage resistor arrangement (9) comprising a rod-shaped supporting substrate (11) made of electrically insulating material and a plurality of individual resistors (10) and/or discrete capacitors spaced apart from each other in the longitudinal direction of the supporting substrate (11), wherein at least one conductive path (12) extending in the longitudinal direction of the supporting substrate (11) is formed on the supporting substrate (11) which is galvanically connected to the individual resistors (10) and/or the discrete capacitors, and wherein the individual resistors (10) and/or discrete capacitors are realized as SMD components soldered directly onto the supporting substrate (11) by means of solderable conductor pads, wherein each individual resistor (10) and/or each discrete capacitor is allocated a connection area radially protruding from the longitudinal direction of the supporting substrate (11) which is integrally formed with the supporting substrate (11) and on which the associated individual resistor (10) and/or associated discrete capacitor is arranged, and wherein each individual resistor (10) and/or each discrete capacitor is allocated a first connecting conductive path (13) via which the individual resistor (10) and/or discrete capacitor is galvanically connected to the conductive path (12) extending in the longitudinal direction of the supporting substrate (11), and wherein each individual resistor (10) and/or each discrete capacitor is allocated a second connecting conductive path (14) via which the individual resistor (10) and/or discrete capacitor is galvanically connected to a conductor pad for an electrode tip, wherein the conductive path (12) extending in the longitudinal direction of the supporting substrate (11), the first and second conductive paths (13, 14) and the connection areas (15) are applied to the supporting substrate (11) by means of a photochemical process.

2. The high voltage resistor arrangement (9) according to claim 1,
wherein a SMD ceramic resistor is arranged on each connection area.

3. The high voltage resistor arrangement (9) according to claim 1 or 2, wherein the supporting substrate (11) is formed from a fiber-reinforced plastic material or from laminated paper.

4. The high voltage resistor arrangement (9) according to one of claims 1 to 3, wherein a lacquer coating is formed on at least areas of the supporting substrate (11) and the conductive path (11) formed on the supporting substrate (11).

5. The high voltage resistor arrangement (9) according to claim 4,
wherein the supporting substrate (11) has a thickness of between 1.0 mm and 2.0 mm, wherein the conductive path (12) has a thickness of between 0.025 mm and 0.045 mm, and wherein the lacquer coating has a thickness of between 0.005 mm and 0.015 mm.

6. The high voltage resistor arrangement (9) according to one of claims 1 to 5, wherein the supporting substrate (11) is divided into a plurality of supporting substrate sections, each of a prespecified or specifiable defined length, wherein to define the overall length of the high voltage resistor arrangement (9), a plurality of adjacent supporting substrate sections are connected or connectable together end-to-end as needed, in particular by soldering and/or other connection method.

7. An electrode arrangement (16) for an ionization device (20) for reducing or applying electrostatic charge on a moving material web, wherein the electrode arrangement (16) comprises a high voltage resistor arrangement (9) according to one of claims 1 to 6 and a plurality of electrode tips particularly with tungsten or stainless steel, wherein each electrode tip is galvanically connected to a respective one of the plurality of resistors (10) and/or discrete capacitors.

8. The electrode arrangement (16) according to claim 7, wherein each resistor (10) and/or each discrete capacitor is allocated a conductor pad by which the respective resistor (10) and/or discrete capacitor is galvanically connected, and wherein one electrode tip is in each case galvanically connected to the conductor pad, preferably by means of a solder contact or a crimp contact.

9. A method for manufacturing a high voltage resistor arrangement (9) according to one of claims 1 to 6, wherein the method comprises the following method steps:
- providing the supporting substrate (11) of an electrically insulating material;
- forming a conductive path structure on the supporting substrate (11); and
- connecting the SMD components to the conductive path structure, and doing so by soldering the SMD components directly onto the supporting substrate (11),
wherein the conductive path structure is formed fully automatically by a photochemical process, and wherein the SMD components are preferably fitted to the supporting substrate (11) fully automatically.

10. The method according to claim 9,
wherein each SMD component is galvanically connected to an electrode tip, wherein the supporting substrate (11) is automatically cleaned of dust and grease in a circuit board cleaning system prior to galvanic connection to the electrode tips.

11. An ionization device (20), in particular in the form of an ionizing bar for the non-contact neutralizing of electrostatic charges, particularly of insulating materials, wherein the ionization device (20) has a housing (21) for accommodating a cascade insert (1) with a cascade connection (3), and wherein the housing (21) holds at least one electrode arrangement (16) according to claim 7 or 8, wherein an outlet of the cascade connection (3) is capacitively, inductively or resistively connected or connectable to the conductive path (12) extending in the longitudinal direction of the supporting substrate (11) of the electrode arrangement (16).

## Revendications

1. Agencement de résistance à haute tension (9) comprenant un substrat de support (11) en forme de barre en un matériau électriquement isolant et une pluralité de résistances individuelles (10) et/ou de condensateurs discrets espacés les uns des autres dans la direction longitudinale du substrat de support (11),
dans lequel
au moins une piste conductrice (12) s'étendant dans la direction longitudinale du substrat de support (11) est réalisée sur le substrat de support (11), qui est reliée galvaniquement aux résistances individuelles (10) et/ou aux condensateurs discrets, et les résistances individuelles (10) et/ou les condensateurs discrets sont réalisés sous forme de composants CMS qui sont brasés directement sur le substrat de support (11) au moyen de surfaces de connexion aptes au brasage,
à chaque résistance individuelle (10) et/ou à chaque condensateur discret est associée une zone de connexion qui s'écarte dans une direction radialement de la direction longitudinale du substrat de support (11), qui est réalisée intégralement avec le substrat de support (11), et sur laquelle est disposé(e) la résistance individuelle (10) associée et/ou le condensateur discret associé, et
à chaque résistance individuelle (10) et/ou à chaque condensateur discret est associée une première piste conductrice de connexion (13) par laquelle la résistance individuelle (10) et/ou le condensateur discret est relié(e) galvaniquement à la piste conductrice (12) s'étendant dans la direction longitudinale du substrat support (11), et
à chaque résistance individuelle (10) et/ou à chaque condensateur discret est associée une deuxième piste conductrice de connexion (14) par laquelle la résistance individuelle (10) et/ou le condensateur discret est relié(e) galvaniquement à une surface de connexion pour une pointe d'électrode,
la piste conductrice (12) s'étendant dans la direction longitudinale du substrat de support (11), les premières et deuxièmes pistes conductrices (13, 14) et les zones de connexion (15) sont appliquées sur le substrat de support (11) au moyen d'un procédé photochimique.

2. Agencement de résistance à haute tension (9) selon la revendication 1, dans lequel une résistance céramique CMS est disposée sur chaque zone de connexion.

3. Agencement de résistance à haute tension (9) selon la revendication 1 ou 2,
dans lequel le substrat de support (11) est formé d'un matériau plastique renforcé par des fibres ou d'un papier dur.

4. Agencement de résistance à haute tension (9) selon l'une des revendications 1 à 3,
dans lequel une couche de vernis est formée au moins localement sur le substrat de support (11) et sur la piste conductrice (12) formée sur le substrat de support (11).

5. Agencement de résistance à haute tension (9) selon la revendication 4, dans lequel le substrat de support (11) présente une épaisseur comprise entre 1,0 mm et 2,0 mm, la piste conductrice (12) présente une épaisseur comprise entre 0,025 mm et 0,045 mm, et la couche de vernis présente une épaisseur comprise entre 0,005 mm et 0,015 mm.

6. Agencement de résistance à haute tension (9) selon l'une des revendications 1 à 5,
dans lequel le substrat de support (11) est subdivisé en plusieurs sections de substrat de support qui présentent chacune une longueur définie prédéterminée ou pouvant être prédéterminée,
pour déterminer la longueur totale de l'agencement de résistance à haute tension (9), plusieurs sections de substrat de support adjacentes les unes aux autres sont, selon les besoins, reliées ou peuvent être reliées les unes aux autres sur leur face frontale, en particulier par brasage et/ou par une autre technique de liaison.

7. Agencement d'électrodes (16) pour un dispositif d'ionisation (20) destiné à réduire ou à appliquer une charge électrostatique sur une bande de matériau en mouvement, l'agencement d'électrodes (16) comprenant un agencement de résistance à haute tension (9) selon l'une des revendications 1 à 6 et une pluralité de pointes d'électrode comprenant en particulier du tungstène ou de l'acier inoxydable, une pointe d'électrode étant respectivement reliée galvaniquement à l'une de la pluralité de résistances (10) et/ou de condensateurs discrets.

8. Agencement d'électrodes (16) selon la revendication 7,
dans lequel à chaque résistance (10) et/ou à chaque condensateur discret est associée une surface de connexion à laquelle la résistance (10) et/ou le condensateur discret correspondant est relié(e) galvaniquement, et
une pointe d'électrode respective est reliée galvaniquement à la surface de connexion, de préférence par un contact brasé ou par un contact serti.

9. Procédé de fabrication d'un agencement de résistance à haute tension (9) selon l'une des revendications 1 à 6, le procédé comprenant les étapes suivantes consistant à :
- fournir un substrat de support (11) en un matériau électriquement isolant ;
- former une structure de pistes conductrices sur le substrat de support (11) ; et
- connecter les composants CMS à la structure de pistes conductrices, et ce en brasant les composants CMS directement sur le substrat de support (11),
la structure de pistes conductrices étant formée de manière entièrement automatique par un procédé photochimique, et les composants CMS étant montés de préférence de manière entièrement automatique sur le substrat de support (11).

10. Procédé selon la revendication 9,
dans lequel chaque composant CMS est relié galvaniquement à une pointe d'électrode,
avant la liaison galvanique avec les pointes d'électrode, le substrat de support (11) est nettoyé automatiquement pour être sans poussière ni graisse, dans une installation de nettoyage de circuits imprimés.

11. Dispositif d'ionisation (20), en particulier sous la forme d'une barre d'ionisation pour la neutralisation sans contact de charges électrostatiques, en particulier de matériaux isolants,
dans lequel le dispositif d'ionisation (20) présente un boîtier (21) destiné à recevoir un insert en cascade (1) avec un circuit en cascade (3),
au moins un agencement d'électrodes (16) selon la revendication 7 ou 8 est porté par le boîtier (21), et
une sortie du circuit en cascade (3) est reliée ou peut être reliée de manière capacitive, inductive ou résistive à la piste conductrice (12) s'étendant dans la direction longitudinale du substrat de support (11) de l'agencement d'électrodes (16).
